# EUROPÄISCHE PATENTANMELDUNG

(11) **EP 0 857 419 A2**
(43) Veröffentlichungstag der Anmeldung: **12.08.1998**
(21) Anmeldenummer: 97106701.2
(22) Anmeldetag: 23.04.1997
(51) Int. Cl.: A01K 5/01

(54) **Fressnapf**

(30) Priorität: 07.02.1997 DE 29702127 U
(71) Anmelder: Gaspary, Dietrich, 89522 Heidenheim (DE)
(72) Erfinder: Gaspary, Dietrich, 89522 Heidenheim (DE)

(57) **Zusammenfassung**

Bei der Fütterung von Kleintieren wie Katzen und Hunde, werden Freßnäpfe verwendet die nach jeder Benutzung ausgewaschen werden müssen. Der Freßnapf (1) aus Papier oder einem anderen kompostierbarem oder recycelbarem Material wird nach Gebrauch als Einwegnapf entsorgt.
Das führt zu mehr Hygiene für Mensch und Tier und schont die Umwelt.

## Beschreibung

Die Neuerung betrifft einen Freßnapf für Kleintiere aus Papier oder ähnlichen recyclebaren Materialien.

Zur Fütterung von Kleintieren insbesondere Katzen und Hunde werden Freßnäpfe aus verschiedenen festen, abwaschbaren Werkstoffen verwendet. Bei Fütterung mit Dosenfutter bleiben in den meisten Fällen Futterreste am Napf kleben. Diese kleben so fest daß der Napf vor der nächsten Fütterung aus hygienischen Gründen abgewaschen werden muß. Die dafür benutzte Wassermenge beläuft sich in der Regel auf ca. 5 bis 6 Lt. Wasser. Das Wasser sollte aber auch zumindest warm sein oder eine nicht unbeachtliche Menge an Spülmittel enthalten. Wertvolles Trinkwasser wird verschwendet und Energieverbrauch sowie Spülmittel belasten die Umwelt.

Die Neuerung hat die Aufgabe durch die Herstellung des Napfes aus Papier oder einem anderen abbaubaren oder recyclebaren Material, Hygiene am Futterplatz für Kleintiere zu sichern und einen wirkungsvollen Umweltschutz zu gewährleisten. Da der so hergestellte Napf keine besonders feste Form aufweist, wird dieser in eine wiederverwendbare Halterung eingesetzt, und nach jeder Fütterung erneuert.

Die Form des Napfes kann rund, oval oder eckig sein. In den nachfolgenden Zeichnungen ist ein Ausführungsbeispiel dargestellt.
Fig. 1 eine Draufsicht auf einen Fressnapf
Fig. 2 ein Schnitt durch einen Freßnapf und Freßnapfhalterung

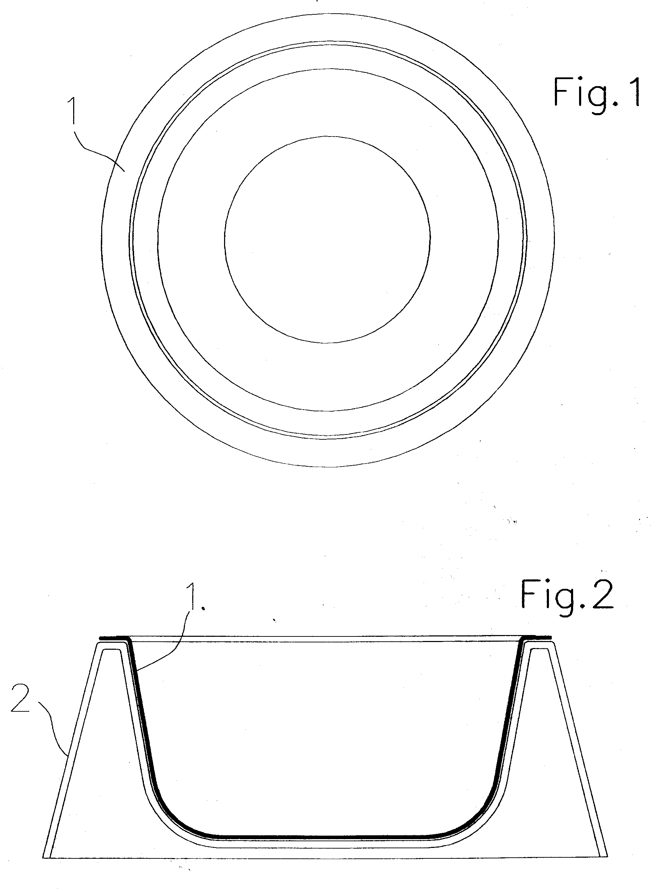

Der in Fig. 1 und 2 gezeigte Freßnapf 1 für Kleintiere ist für eine einmalige Fütterung gedacht und wird nach jeder Fütterung aus der Freßnapfhalterung 2 entfernt und entsorgt. Die gezeigte Form ist dabei nicht bindend, vielmehr geht es um das Material aus dem der Napf gefertigt ist.

## Patentansprüche

1. Freßnapf aus Papier, einem kompostierbaren oder recyclebaren Material als Einwegnapf.
